# EUROPEAN PATENT APPLICATION

(11) **EP 2 254 361 A1**
(43) Date of publication of application: **24.11.2010**
(21) Application number: 09723141.9
(22) Date of filing: 18.03.2009
(51) Int. Cl.: H04W 12/08

(54) **WIRELESS COMMUNICATION METHOD, SYSTEM AND BASE STATION**

(30) Priority: 21.03.2008 CN 200810102428
(71) Applicant: Huawei Technologies Co., Ltd., Longgang District, Shenzhen Guangdong 518129 (CN)
(72) Inventor: XUN, Haibin, Shenzhen 518129 (CN); GUO, Jiang, Shenzhen 518129 (CN); LIU, Shaofeng, Shenzhen 518129 (CN); CHEN, Yinghao, Shenzhen 518129 (CN)
(74) Representative: Kreuz, Georg Maria
(86) International application number: PCT/CN2009/070873
(87) International publication number: WO 2009/115045

(57) **Abstract**

The present invention relates to mobile communication technologies, and discloses a method, a system, and a BTS for radio communication. The BTS encrypts a transmission signaling in a process of establishing a first channel and a voice call of the MS; the BTS suspends delivery of an air interface system information message after completion of encryption; after the MS is handed over to a second channel as instructed by a handover command or an assignment command, the BTS sends the relevant air interface system information message on the second channel. In the embodiments of the present invention, after encrypting the voice communication is completed, the BTS suspends delivery of the system information message and the delivery of the relevant system information message resumes after the information transmission between the BTS and the MS is handed over to a new channel. In this way, the communication is implemented between the MS and the BTS, and the security of the air interface transmission signaling in the radio communication system is improved.

## Description

This application claims priority to Chinese Patent Application No. 200810102428.1, filed with the Chinese Patent Office on March 21, 2008 and entitled "Method, System and BTS for Radio Communication", which is hereby incorporated by reference in its entirety.

### FIELD OF THE INVENTION

The present invention relates to mobile communication technologies, and in particular, to a method, a system, and a Base Transceiver Station (BTS) for radio communication.

### BACKGROUND OF THE INVENTION

Global System for Mobile communication (GSM) is a cellular communication system applied most widely in the world. The first-generation GSM was deployed in early 1990s, and is a network based on the second-generation cellular technologies. It can provide digital voice communication which is more advanced than analog voice communication.

In actual application of early cellular systems, providing security is almost impossible, and the cellular systems are impeded by sharply increased criminal behavior, for example, eavesdropping on a Mobile Station (MS) call, cloning a call, and theft call. The GSM is the first cellular communication system that takes security into consideration seriously. For example, the GSM introduces a Subscriber Identity Module (SIM) into an MS.

The GSM uses two protection mechanisms for protecting the air interface part of the GSM: encryption for protecting personal privacy, and SIM security authentication for preventing unauthorized users from accessing the GSM network.

The encryption process for protecting personal privacy of users begins only after the MS initiates authentication to the network side (including Base Station Subsystem (BSS) and network subsystem). The GSM allocates a Temporary Mobile Subscriber Identity (TMSI) to the MS to protect the subscriber identity. The TMSI is used to authenticate the MS before the encryption process begins. Once the call is encrypted, the TMSI for the next call can be transposed with security.

The authentication process starts at the beginning of the wireless communication between the MS and the network. After the authentication process of the MS, the network initiates another authentication process which is a request and response solution to pre-sharing of a key (Ki) between the MS and the network. In this solution, the network sends a 128-bit random number (RAND) to the MS. The MS then transmits the received RAND to the SIM. The SIM calculates a response (SRES) according to the RAND, namely, SRES = A3(Ki, RAND), where A3 is a unidirectional function. The MS sends the SRES to the network. The network also uses the RAND and the A3 algorithm to calculate the SRES. If the network finds that the calculated SRES is the same as the SRES calculated by the MS, the network notifies authentication success to the MS, and the access goes on; otherwise, the access stops. After the MS is authenticated successfully, both the MS and the network use the A8 algorithm to generate a session encryption key "Kc" through this formula: Kc=A8(Ki, RAND), where A8 is a unidirectional function. The remaining part of the call is encrypted through the Kc, and the reciprocal authentication between the MS and the network is also encrypted through the Kc.

Initially, an encryption algorithm applied to GSM is an A5/1 encryption algorithm. However, the export of the A5/1 encryption algorithm is controlled strictly. With the growth of the GSM networks outside Europe, an encryption algorithm free from export restriction is required more and more urgently. To fulfill such a requirement, an A5/2 encryption algorithm is released, which, however, is very low in security. The design of the foregoing two encryption algorithms is not disclosed. In 2002, a new A5/3 encryption algorithm was added into the family of the A5 encryption algorithms. Unlike the A5/1 and A5/2 encryption algorithms, the internal design of the A5/3 encryption algorithm is disclosed to the outside. The A5/3 encryption algorithm is based on KASUMI algorithm design. This algorithm is applied to 3rd Generation (3G) mobile communication systems. Because the A5/3 encryption algorithm involves upgrade of an MS and a Base Transceiver Station (BTS), it has not been massively deployed in the GSM by now. The internal design of the A5/1 and A5/2 encryption algorithms was deduced through reverse engineering performed by Briceno in 1999 in the actual application of the GSM, and has passed known test-vector verification and is suitable for application in networks. However, the reverse engineering deduction of the A5/1 and A5/2 encryption algorithms shows that neither the A5/1 encryption algorithm nor the A5/2 encryption algorithm is capable of providing enough security for the GSM. In particular, the A5/2 encryption algorithm is even worse than the A5/1 encryption algorithm in security. Hacker organizations even may use the defects of the A5/2 encryption algorithm to attack the A5/1 and A5/3 encryption algorithms. Therefore, in the practical launched GSM networks, the A5/2 encryption algorithm is seldom applied. The GSM organization is considering deletion of the A5/2 encryption algorithm from the GSM standards. Now, security of the A5/1 encryption algorithm is a primary concern to high-end operators.

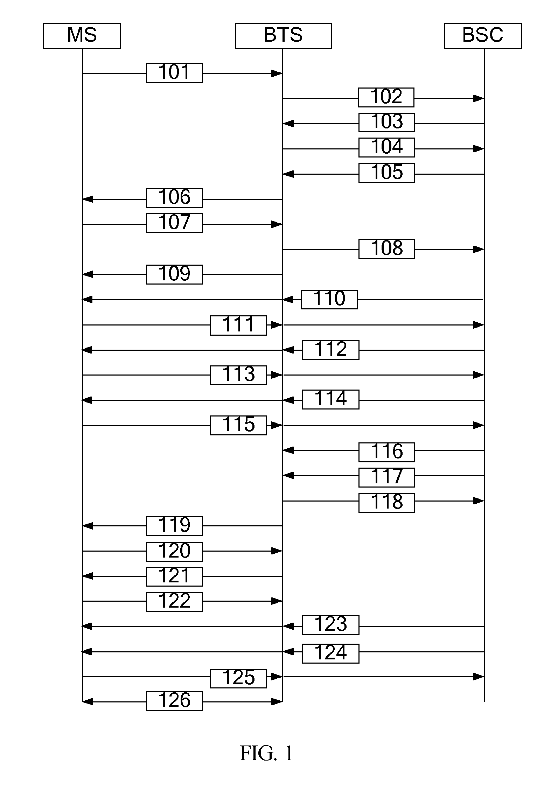

In the process of developing the present invention, the inventor finds that in GSM voice call service, a voice call is set up through a series of signaling interaction between the BTS and the MS. The signaling before an encryption command is sent without being encrypted, but the signaling and service data after the encryption command are sent in the encrypted manner. FIG. 1 shows a typical encrypted voice call process in the GSM:
Step 101: The MS sends a random access request to the BTS.
Step 102: The BTS transmits the random access request to a Base Station Controller (BSC).
Step 103: The BSC sends a channel activation message to the BTS.
Step 104: The BTS returns a channel activation acknowledge message to the BSC.
Step 105: The BSC sends an immediate assignment command message to the BTS.
Step 106: The BTS sends an immediate assignment command message to the MS.
Step 107: The MS sends a link establish message to the BTS.
Step 108: The BTS sends a link establish indication message to the BSC.
Step 109: The BTS sends a link establish acknowledge message to the MS.
Step 110: The BSC sends an authentication command message to the BTS, and the BTS forwards the authentication command message to the MS.
Step 111: The MS sends an authentication response message to the BTS, and the BTS forwards the authentication response message to the BSC.
Step 112: The BSC sends an encryption command message to the BTS, and the BTS forwards the encryption command message to the MS.
Step 113: The MS sends an encryption complete message to the BTS, and the BTS sends the encryption complete message to the BSC.
Step 114: The BSC sends a call start message to the BTS, and the BTS sends the call start message to the MS.
Step 115: The MS sends a call confirmed message to the BTS, and the BTS sends the call confirmed message to the BSC.
Step 116: The BSC sends an assignment command message to the BTS.
Step 117: The BSC sends a channel activation message to the BTS.
Step 118: The BTS sends a channel activation acknowledge message to the BSC.
Step 119: The BTS sends an assignment command message to the MS.
Step 120: The MS sends a traffic channel link establish message to the BTS.
Step 121: The BTS sends a traffic channel link establish acknowledge message to the MS.
Step 122: The MS sends an assignment complete message to the BTS.
Step 123: The BSC sends an alerting message to the BTS, and the BTS sends the alerting message to the MS.
Step 124: The BSC sends a connect message to the BTS, and the BTS sends the connect message to the MS.
Step 125: The MS sends a connect acknowledge message to the BTS, and the BTS sends the connect acknowledge message to the BSC.
Step 126: The conversation begins.

In step 113 and before step 113, the messages between the MS and the network are sent in plain texts. After step 113, the messages exchanged between the MS and the network are encrypted. After completion of the encryption mode, the BTS sends a system information 5 message, system information 5bis message and system information 5ter message to the MS periodically on a Slow Associated Control Channel (SACCH) associated with a Stand-alone Dedicated Control Channel (SDCCH). Many contents in the system information 5 message, system information 5bis message and system information 5ter message can be easily guessed out. Such system information messages are sent on a dedicated channel of the GSM. For all MSs, the sent contents are the same. Moreover, such system information messages make full use of the 23 bytes of the air interface message basically, without allowing for change. Consequently, it is easy to guess the whole system information message received by one MS according to the message received by another MS. Therefore, such system information messages can be easily manipulated by attackers when being sent on a downlink channel from the BTS to the MS. Most attacks are known plain text attacks. For example, an attacker needs to not only intercept the required data frames, but also know the content of the frames before decryption.

With the progress of technologies, a Central Processing Unit (CPU) or Field-Programmable Gate Array (FPGA) is more and more powerful in computation and processing. It is increasingly possible to crack the A5/1 encryption algorithm of the GSM by using known plain texts, which reduces the security of the air interface signaling transmission of the GSM drastically. Although the updated A5/3 encryption algorithm in the GSM enhances security of the GSM, plenty of MSs and devices on the existing network do not support the A5/3 encryption algorithm due to limitation of hardware and software. Therefore, many GSM service providers require enhancement of GSM security without changing the A5/1 encryption algorithm or the MSs on the existing network.

### SUMMARY OF THE INVENTION

The embodiments of the present invention provide a method, a system, and a BTS for radio communication to improve security of air interface transmission signaling of a radio communication system.

A method for radio communication provided in an embodiment of the present invention includes:
encrypting a transmission signaling in a process of establishing a first channel and a voice call of an MS;
suspending delivery of an air interface system information message;
handing the MS over to a second channel; and
sending the air interface system information message on the second channel.

A BTS provided in an embodiment of the present invention includes:
a first module, adapted to encrypt a transmission signaling in a process of establishing a first channel and a voice call of an MS;
a second module, adapted to suspend delivery of an air interface system information message;
a third module, adapted to hand the MS over to a second channel; and
a fourth module, adapted to send the air interface system information message on the second channel.

A system for radio communication provided in an embodiment of the present invention includes an MS, a BSS, and a network subsystem. The BSS includes:
a first module, adapted to encrypt a transmission signaling in a process of establishing a first channel and a voice call of an MS;
a second module, adapted to suspend delivery of an air interface system information message;
a third module, adapted to hand the MS over to a second channel; and
a fourth module, adapted to send the air interface system information message on the second channel.

The foregoing technical solution shows that through the method, the system and the BTS for radio communication in an embodiment of the present invention, after completion of encrypting the voice communication, the BTS suspends delivery of the system information message; and the delivery of the relevant system information message resumes after the information transmission between the BTS and the MS is handed over to a new channel. In this way, the communication is implemented between the MS and the BTS, and the security of the air interface transmission signaling in the radio communication system is improved.

The present invention is described below with reference to the accompanying drawings and

### preferred embodiments.

### BRIEF DESCRIPTION OF THE DRAWINGS

FIG. 1 is a signaling chart of an encryption process for a GSM voice call in the prior art;
FIG. 2 is a flowchart of a method for radio communication in the first embodiment of the present invention;
FIG. 3 is a flowchart of a method for radio communication in the second embodiment of the present invention;
FIG. 4 shows a structure of a BTS in an embodiment of the present invention; and
FIG. 5 shows a structure of a system for radio communication in an embodiment of the present invention.

### DETAILED DESCRIPTION OF THE EMBODIMENTS

Considering that after an encryption process is completed through interaction between the BTS and the MS in a communication system, the detailed contents of some system information messages tend to be guessed out, and attackers can obtain the conversation information of the user, the embodiments of the present invention provide a method for preventing such system information messages from being guessed out by suspending delivery of the relevant system information messages after completion of encryption, thus enhancing communication security. The foregoing method is expounded in detail below, taking a GSM system as an example.

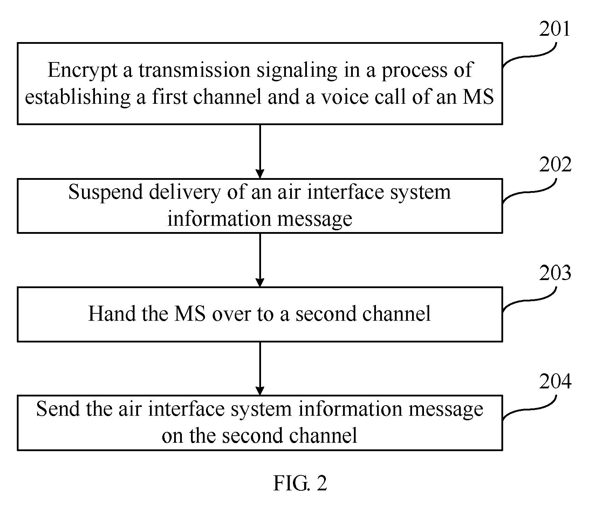

FIG. 2 is a flowchart of a method for radio communication in the first embodiment of the present invention. The method includes the following steps:

Step 201: Encrypt a transmission signaling in a process of establishing a first channel and a voice call of an MS.

For example, the encryption process may be: The transmission signaling between the MS and the BTS is encrypted through the steps before step 113 in FIG. 1.

Step 202: Suspend delivery of an air interface system information message.

The BTS suspends delivery of a system information message that tends to be guessed out by attackers to the air interface, for example, a system information 5 message, system information 5bis message, or system information 5ter message.

Step 203: Hand the MS over to a second channel.

For example, the MS receives a handover command or an assignment command from the BTS, and a new channel (namely, a second channel) is allocated for MS signaling transmission.

Step 204: Send the air interface system information message on the second channel.

After the handover of the channel for MS signaling transmission is completed, the suspended system information message is put onto the new channel for sending. For inability of manipulating the encrypted system information message, namely, inability of cracking the handover command or assignment command, attackers are unable to further track the new channel after the handover command or assignment command is run.

Through the method for radio communication provided herein, the delivery of the system information message vulnerable to interception resumes after the handover of the channel for MS signaling transmission is completed. In this way, attackers are unable to obtain the relevant system information message in time for cracking the handover command or assignment command, and therefore the security of radio communication is improved.

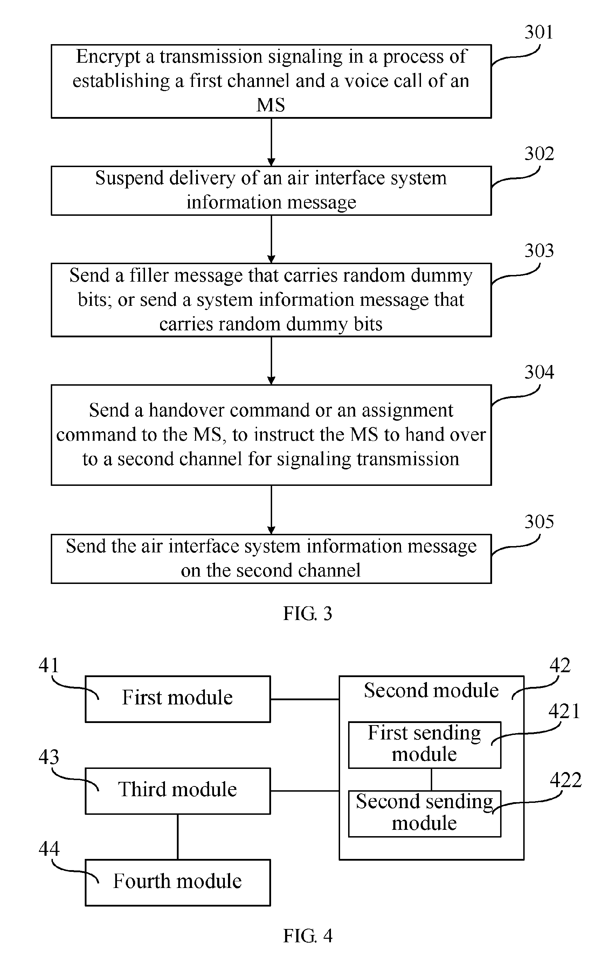

FIG. 3 is a flowchart of a method for radio communication in the second embodiment of the present invention. The method includes the following steps:

Step 301: Encrypt a transmission signaling in a process of establishing a first channel and a voice call of an MS.

Step 302: Suspend delivery of an air interface system information message.
Step 303: Send a filler message that carries random dummy bits; or send a system information message that carries random dummy bits.
The time interval between completion of encryption and delivery of the handover command or assignment command is very short, and is generally less than one second. The number of times of suspending delivery of the relevant system information message is 1 or 2 at most. The MS also receives the relevant system information message before encryption, and receives such a message once or twice subsequently, which brings no big impact on the MS. Nevertheless, in order to minimize the impact on the MS, other irrelevant system information messages may be sent (for example, a filler message that carries random dummy bits or a system information message 6 that carries random dummy bits) in the time interval of suspending delivery of the relevant system information message.

Step 304: Send a handover command or an assignment command to the MS, to instruct the MS to hand over to a second channel for signaling transmission.

Step 305: Send the air interface system information message on the second channel.

After the MS completes encrypting the transmission signaling on the SDCCH, namely, after the BTS receives an encryption completion message, the BTS suspends delivery of the system information message to the air interface, and sends a filler message or system information message 6 that carries random dummy bits instead. In this way, attackers are unable to manipulate the system information message in the encrypted mode. Subsequently, the MS receives a handover command or an assignment command indicative of handover to a new channel, and sends the system information message vulnerable to interception on the new channel. For inability of manipulating the encrypted system information message, attackers are unable to crack the handover command or assignment command in time, and are unable to further track the channel after the handover command or assignment command is run.

Through the method for radio communication provided herein, the delivery of the system information message vulnerable to interception resumes after the handover of the channel for MS signaling transmission is completed. In this way, attackers are unable to obtain the relevant system information message in time for cracking the handover command or assignment command, and therefore the security of radio communication is improved.

FIG. 4 shows a structure of a BTS in an embodiment of the present invention. The BTS includes:
a first module 41, adapted to encrypt a transmission signaling in a process of establishing a first channel and a voice call of an MS;
a second module 42, adapted to suspend delivery of an air interface system information message;
a third module 43, adapted to hand the MS over to a second channel; and
a fourth module 44, adapted to send the air interface system information message on the second channel.

The second module 42 may include: a first sending module 421, adapted to send a filler message that carries random dummy bits after suspending delivery of the air interface system information message; and/or a second sending module 422, adapted to send another system information message that carries random dummy bits after suspending delivery of the air interface system information message.

The detailed process of applying the BTS in this embodiment to perform radio communication is similar to the method embodiment above, and therefore is not repeated here.

Through the BTS provided herein, a module of the BTS sends the system information message vulnerable to interception to the MS after the handover of the channel for signaling transmission. In this way, attackers are unable to obtain the relevant system information message in time for cracking the handover command or assignment command, and therefore the security of radio communication is improved.

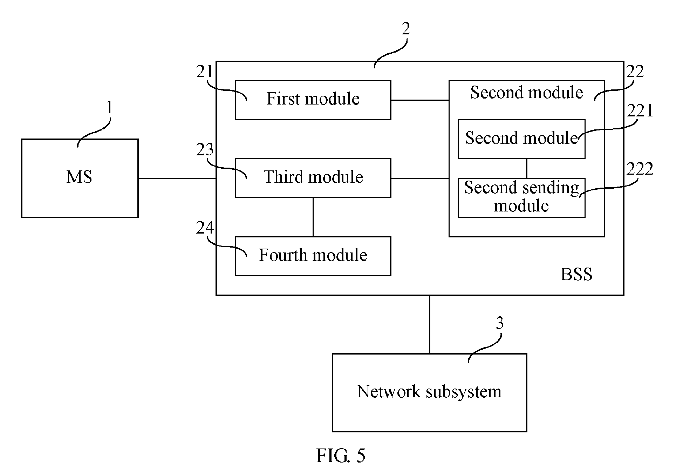

FIG. 5 shows a structure of a system for radio communication in an embodiment of the present invention. The system for radio communication includes an MS 1, a BSS 2, and a network subsystem 3. The BSS 2 includes:
a first module 21, adapted to encrypt a transmission signaling in a process of establishing a first channel and a voice call of an MS;
a second module 22, adapted to suspend delivery of the air interface system information message that is vulnerable to crack and attack by attackers;
a third module 23, adapted to hand the MS over to a second channel; and
a fourth module 24, adapted to send the air interface system information message on the second channel.

The second module 22 may include: a first sending module 221, adapted to send a filler message that carries random dummy bits after suspending delivery of the air interface system information message; and/or a second sending module 222, adapted to send another system information message that carries random dummy bits after suspending delivery of the air interface system information message.

The MS 1 is adapted to: receive the encrypted signaling in a voice call; receive a handover command or an assignment command indicative of handing over to a second channel for signaling transmission; and receive a signaling message after success of handover of the channel, where the signaling message is transmitted on the second channel and includes the system information message vulnerable to crack.

The detailed process of applying the system for radio communication to this embodiment to perform radio communication is similar to the method embodiment above, and therefore is not repeated here.

Through the system for radio communication provided herein, a BSS sends the system information message vulnerable to interception to the MS after the handover of the channel for signaling transmission is completed. In this way, attackers are unable to obtain the relevant system information message in time for cracking the handover command or assignment command, and therefore the security of radio communication is improved.

Finally, it should be noted that the above embodiments are provided for merely describing the technical solutions of the present invention, but not intended to limit the present invention. It is apparent that persons skilled in the art can make various modifications and variations to the invention without departing from the scope of the invention. The present invention is intended to cover the modifications and variations provided that they fall in the scope of protection defined by the following claims or their equivalents.

Persons of ordinary skill in the art should understand that all or part of the steps of the method in the embodiments of the present invention may be implemented by a program instructing relevant hardware. The program may be stored in a computer readable storage medium. When the program runs, one of the steps of the method or any combination of the steps in the embodiments of the present invention are performed. The storage medium may be Read Only Memory (ROM), magnetic disk, or compact disk.

## Claims

1. A method for radio communication, comprising:
encrypting a transmission signaling in a process of establishing a first channel and a voice call of a Mobile Station, MS;
suspending delivery of an air interface system information message;
handing the MS over to a second channel; and
sending the air interface system information message on the second channel.

2. The method for radio communication of claim 1, wherein:
after suspending delivery of the air interface system information message, the method comprises: sending a filler message that carries random dummy bits.

3. The method for radio communication of claim 1, wherein:
after suspending delivery of the air interface system information message, the method comprises: sending a system information message that carries random dummy bits.

4. A Base Transceiver Station, BTS, comprising:
a first module (41), adapted to encrypt a transmission signaling in a process of establishing a first channel and a voice call of a Mobile Station, MS;
a second module (42), adapted to suspend delivery of an air interface system information message;
a third module (43), adapted to hand the MS over to a second channel; and
a fourth module (44), adapted to send the air interface system information message on the second channel.

5. The BTS of claim 4, wherein the second module (42) comprises:
a first sending module (421), adapted to send a filler message that carries random dummy bits; and/or
a second sending module (422), adapted to send a system information message that carries random dummy bits.

6. A system for radio communication, comprising a Mobile Station, MS (1), a Base Station Subsystem, BSS (2), and a network subsystem (3), wherein the BSS comprises:
a first module (21), adapted to encrypt a transmission signaling in a process of establishing a first channel and a voice call of the MS;
a second module (22), adapted to suspend delivery of an air interface system information message;
a third module (23), adapted to hand the MS over to a second channel; and
a fourth module (24), adapted to send the air interface system information message on the second channel.

7. The system for radio communication of claim 6, wherein the second module (22) comprises:
a first sending module (221), adapted to send a filler message that carries random dummy bits; and/or
a second sending module (222), adapted to send a system information message that carries random dummy bits.

8. The system for radio communication of claim 6 or claim 7, wherein:
the MS (1) is adapted to receive an encrypted signaling and a channel handover instruction, and receive a message on the second channel.
